# EUROPEAN PATENT APPLICATION

(11) **EP 3 040 596 A1**
(43) Date of publication of application: **06.07.2016**
(21) Application number: 15002395.0
(22) Date of filing: 12.08.2015
(51) Int. Cl.: F16M 13/02, F16B 7/14, F16L 33/12, B63H 16/04, A63C 11/22

(54) **A LEG LOCKING DEVICE FOR A TRIPOD**

(30) Priority: 25.12.2014 CN 201420843756 U
(71) Applicant: Foshan Nanhai Chevan Optical Electronics Co., Ltd, Guangdong (CN)
(72) Inventor: LEE, LI-WHA, Guangdong (CN)
(74) Representative: Samson & Partner Patentanwälte mbB

(57) **Abstract**

The present application discloses a leg locking device for a tripod, comprising a buckle base that telescopes a leg, a buckle and a steel belt; the buckle base is in a form of circular ring and is arranged with an opening; the buckle comprises a cam and a pinch plate; the cam is, through a shaft, connected to one end of the buckle base; one end of the pinch plate is fixed on the cam, and the other end of the pinch plate bends into an arc inward along the buckle base; the steel belt rounds the cam and is fixed at the other end of the buckle base reversely with the pinch plate. In the present application, a buckle is, through the shaft, connected to one end of the buckle base, and the steel belt is fixed at the other end reversely after rounding the cam of the buckle;

## Description

### TECHNICAL FIELD

The present application relates to a leg locking device for a tripod, which falls into the technical field of accessories for photographic equipments.

### BACKGROUND

The leg buckle assembly of the existing photographic tripod is mostly locked by assembling with a buckle through screw arbor and screw thread. Although this locking structure can achieve the locking function, it has disadvantages: the locking structure is so bulky and heavy that it makes the overall size and weight of the tripod not convenient to carry; in addition, the locking process is neither convenientnor easy to operate.

### SUMMARY

The present application, in order to conquer the shortcomings in the prior art, provides a leg locking device for a tripod.

The present application is realized by adopting the following technical solution:
A leg locking device for a tripod comprises a buckle base that telescopes a leg, a buckle and a steel belt; the buckle base is in a form of a circular ring and is arranged with an opening; the buckle comprises a cam and a pinch plate; the cam is, through a shaft, connected to one end of the buckle base; one end of the pinch plate is fixed on the cam, and the other end of the pinch plate bends into an arc inward along the buckle base; the steel belt rounds the cam and is fixed at the other end of the buckle base reversely with the pinch plate.

Preferably, the leg locking device for a tripod further comprises an adjustment structure that is fixed on the buckle base, with one end of the adjustment structure pressed on the leg, to adjust the locking extent; the specific structure of the adjustment structure is as following: the adjustment structure comprises a compact and an adjustment screw; the compact is placed between the buckle base and the leg; the adjustment screw is turned to penetrate the buckle base and is pressed onto the compact; through turning the adjustment screw to adjust the force of the compact on the leg, the degree of tightness of the whole locking device is adjusted.

Preferably, the cam is connected to the buckle base through an inserting shaft.

Compared with the prior art, the advantageous effects of the present application is: in the present utility mode, a buckle shaft is connected to one end of the buckle through shaft, and the steel belt is fixed at the other end reversely after rounding the cam of the buckle; by using of the principle of cam rotation, the cam gradually increases the pulling force on the steel belt during rotation, so that the buckle base is deformed and compressed on the leg; when the cam is rotated to the maximum distance, the cam is still continuously rotated to make the pinch plate pressed onto the buckle base under the reaction force of the steel belt, so that the leg is rapidly locked. The present application is of simple structure, small size, light weight, easy carrying, easy operation, and wide applicability.

### DESCRIPTION OF FIGURES

Figure 1 is a view of the structure of a leg locking device for a tripod in the present application;
Figure 2 is an exploded view of the structure of a leg locking device for a tripod in the present application;
Figure 3 is a view of use status of a leg locking device for a tripod in the present application;
Figure 4 is another view of the structure of a leg locking device for a tripod in the present application.

### EMBODIMENTS

The following is a further description of the preferable embodiments of the present application in combination with the figures.

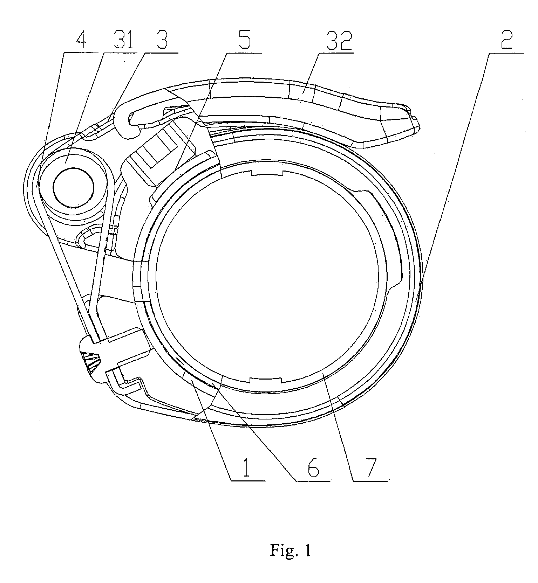

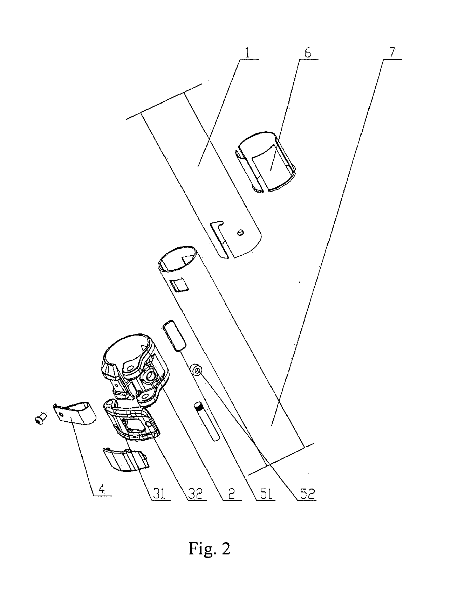

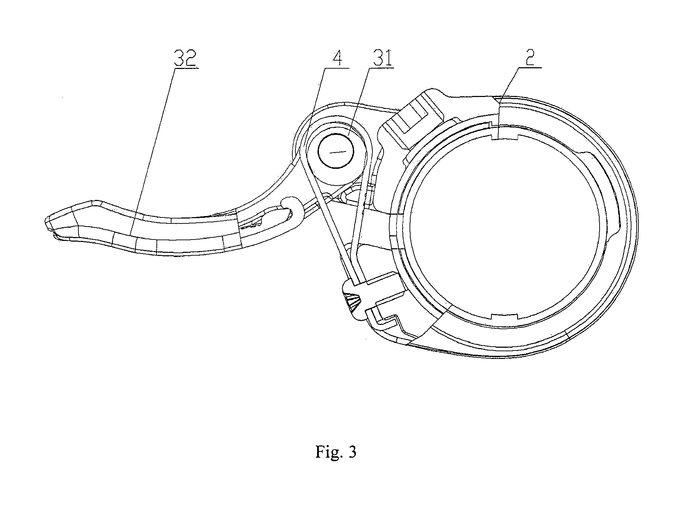

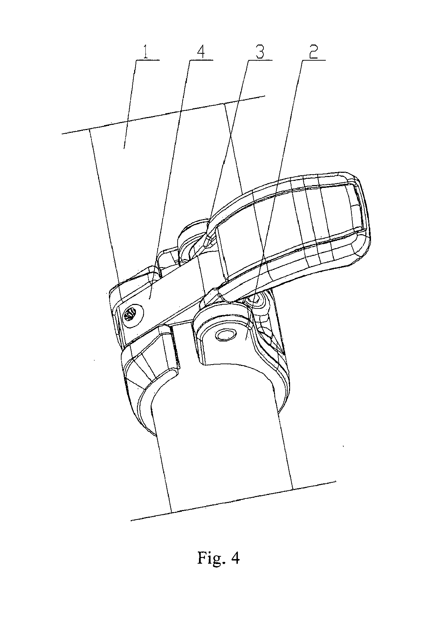

As shown in Figures 1 to 4, a leg locking device for a tripod in this embodiment comprises a buckle base 2 that telescopes a leg 1, a buckle 3, a steel belt 4 and an adjustment structure 5; the leg 1 is telescoped with an opening finger 6 inside; a leg connecting tube 7 is telescoped in the opening finger 6 and can be pulled freely inside the opening finger 6; the buckle base 2 is in a form of a circular ring and is arranged with an opening; the buckle 3 comprises a cam 31 and a pinch plate 32; the cam 31 is, through an inserting shaft, connected to one end of the buckle base 2; one end of the pinch plate 32 is fixed on the cam 31, and the other end of the pinch plate 32 bends into an arc inward along the buckle base 2; the steel belt 4 rounds the cam 31 and is fixed at the other end of the buckle base 2 reversely with the pinch plate 32; the adjustment structure 5 is fixed on the buckle base 2, with one end of the adjustment structure 5 pressed on the leg 1. In the leg locking device for a tripod, the leg connecting tube 7 is connected with the leg 1 through the opening finger 6, which can prevent the leg connecting tube 7 from being damaged by pressure when the leg 1 is deformed under the pressure of the buckle base; the adjustment structure 5 is mainly used to adjust the degree of tightness of the whole locking device. In the leg locking device for a tripod, the buckle 3 is, through shaft, connected to one end of the buckle base 2; by using of the principle of cam rotation, the cam 31 gradually increases the pulling force on the steel belt 4 during rotation, so that the buckle base 2 is deformed and compressed on the leg 1; when the cam 31 is rotated to the maximum distance, under the reaction force of the steel belt 4, the cam 31 is continuously rotated to make the pinch plate 32 of the buckle 3 pressed onto the buckle base 2, so that the leg is rapidly locked, as the status shown by Figure 1. When it needs to loosen the locking device, it only needs to move the pinch plate 32 outwards; after the pinch plate 32 makes the cam 31 to rotate over the maximum distance, the force of the cam 31 against the steel belt will be decreased gradually, which makes the buckle base 2 return to the loosen status, as the status indicted by Figure 3; at this time, there is no pressure from the buckle base 2 against the leg 1; the leg connecting tube 7 can be pulled inside the opening finger 6, so that the leg 1 can be adjusted as to the length and connected.

In this embodiment, the specific structure of the adjustment structure 5 is as following: the adjustment structure 5 comprises a compact 51 and an adjustment screw 52, wherein the compact 51 is placed between the buckle base 2 and the leg 1, and the adjustment screw 52 is turned to penetrate the buckle base 2 and pressed onto the compact 51; through turning the adjustment screw 52 to adjust the force of the compact 51 on the leg 1, the degree of tightness of the whole locking device is adjusted. Of course, the adjustment structure 5 can also adopt other structures, as far as it can realize the function of adjusting the tightness of the whole locking device.

The above mentioned is only preferable embodiments in the present application, and hence it cannot define the scope of carrying out the present application, that it to say, changes and modifications of same effect according to the content described in the Claims or Description of the present application still fall into the scope covered by the Claims of the present application. In addition, the Abstract and the Title are used only for assisting the search for patent documents, rather than for limiting the scope of Claims of the present application.

## Claims

1. A leg locking device for a tripodis **characterized by** comprising a buckle base that telescopes a leg, a buckle and a steel belt; wherein the buckle base is in a form of a circular ring and is arranged with an opening; wherein the buckle comprises a cam and a pinch plate; wherein the cam is, through a shaft, connected to one end of the buckle base; wherein one end of the pinch plate is fixed on the cam, and the other end of the pinch plate bends into an arc inward along the buckle base; and wherein the steel belt rounds the cam and is fixed at the other end of the buckle base reversely with the pinch plate.

2. The leg locking device for a tripod according to Claim 1 is **characterized by** further comprising an adjustment structure that is fixed on the buckle base, with one end of the adjustment structure pressed on the leg.

3. The leg locking device for a tripod according to Claim 2 is **characterized in that** the adjustment structure comprises a compact and an adjustment screw; wherein the compact is placed between the buckle base and the leg; and wherein the adjustment screw is turned to penetrate the buckle base and is pressed onto the compact.

4. The leg locking device for a tripod according to any one of Claims 1-3 is **characterized in that** the cam is connected to the buckle base through an inserting shaft.
